(19) Europäisches Patentamt

European Patent Office

Office européen des brevets

(11) Veröffentlichungsnummer: **0 245 321**
**B1**

(12) **EUROPÄISCHE PATENTSCHRIFT**

(45) Veröffentlichungstag der Patentschrift: **23.05.90**

(21) Anmeldenummer: **86906292.7**

(22) Anmeldetag: **08.11.86**

(86) Internationale Anmeldenummer:
**PCT/DE86/00454**

(87) Internationale Veröffentlichungsnummer:
**WO 87/03059 21.05.87 Gazette 87/11**

(51) Int. Cl.⁵: **F 16 D 65/22**

(54) **SPREIZKEIL-BREMSBETÄTIGUNGSVORRICHTUNG.**

(30) Priorität: **16.11.85 DE 3540671**

(43) Veröffentlichungstag der Anmeldung:
**19.11.87 Patentblatt 87/47**

(45) Bekanntmachung des Hinweises auf die
Patenterteilung:
**23.05.90 Patentblatt 90/21**

(84) Benannte Vertragsstaaten:
**BE FR GB IT NL SE**

(56) Entgegenhaltungen:
**DE-A-1 923 232**
**DE-A-2 147 435**
**DE-A-3 215 904**

(73) Patentinhaber: **Rockwell Golde GmbH**
**Hanauer Landstrasse 338**
**D-6000 Frankfurt (Main) 1 (DE)**

(72) Erfinder: **FISCHENICH, Bernhard, A.**
**Raiffeisenstr. 6**
**D-8755 Alzenau (DE)**

(74) Vertreter: **Oppermann, Ewald, Dipl.-Ing.**
**Am Wiesengrund 35**
**D-6050 Offenbach (Main) (DE)**

Courier Press, Leamington Spa, England.

## Beschreibung

Die Erfindung betrifft eine Spreizkeil-Bremsbetätigungsvorrichtung für Trommelbremsen von Fahrzeugen, mit einem Gehäuse zur Aufnahme eines in eine Gehäuseausnehmung hineinragenden, in seiner Längsrichtung betätigbaren Spreizkeils und zwei zu beiden Seiten des Spreizkeils in einer Querrichtung zum Spreizkeil im Gehäuse gelagerten, axial miteinander fluchtenden, durch mittels des Spreizkeils vorgenommene gegenseitige Verschiebungen die Bremsbacken betätigenden Druckstößeln, wobei jeweils zwischen einer der beiden Keilflächen des Spreizkeils und einer zu dieser parallel ausgerichteten Schrägfläche des benachbarten Druckstößels eine mit ihren Stirnflächen an den Seitenflächen eines im Druckstößel angebrachten die Schrägfläche bildenden Schlitzes geführte zylindrische Rolle kraftschlüssig angeordnet ist und beide Rollen in einem auf dem Spreizkeil und zwischen den Seitenflächen der Schlitze in Längsrichtung gleitend beweglich angeordneten Rollenkäfig geführt sind, welcher mit zwei zur Querrichtung parallel verlaufenden Schenkeln versehen ist, an denen sich in entgegengesetzter Richtung paarweise erstreckende von den Schenkeln nach innen abgekröpfte Führungsvorsprünge angebracht sind, von denen jeweils zwei die Rollen an diametral gegenüberliegenden Stellen tangential führen und an ihren äußeren Enden einen Abstand besitzen, der kleiner als der Rollendurchmesser ist, wobei zwischen den Führungsvorsprüngen jedes Vorsprungpaares ebenflächig mit den Innenwandungen der Schenkel ein dem an die Keilfläche angrenzenden Bereich der Stirnfläche der Rolle zugeordneter axialer Führungsabschnitt am Schenkel gebildet ist.

Bei einer derartigen bekannten Spreizkeil-Bremsbetätigungsvorrichtung (DE-A 32 15 904) sind die dort als radiale Führungsabschnitte bezeichneten Führungsvorsprünge so angeordnet und ausgebildet, daß sie die äußeren Ränder der Rollen, d. h. die zwischen der zylindrischen Umfangsfläche der Rollen und ihren ebenen Stirnflächen vorhandenen abgerundeten Umfangskanten, eng umfassen. Hierdurch sollen beide Rollen an ihren äußeren Rändern axial geführt und somit gegenüber schädlichen Schiefstellungen im Rollenkäfig gesichert sein.

Durch den Führungsangriff an die äußeren Rollenränder wird aber weder eine zufriedenstellende axiale Rollenführung noch eine ausreichende tangentiale Führung erreicht. Zudem ist die Erzielung einer engen Umfassung der abgerundeten äußeren Rollenränder fertigungstechnisch schwierig, weil durch die im Rahmen eines zusätzlichen Verformungsarbeitsschrittes vorgesehene bloße Materialverdrängung infolge der Eindrückung einer V-förmigen Rille in die Führungsvorsprünge nicht ohne weiteres eine der konvexen Rollenrandabrundung genau entsprechende konkave Ausrundung an den Führungsvorsprüngen entsteht. Diese wird noch zusätzlich durch den Umstand erschwert, daß mindestens an einem Führungsvorsprung jedes Führungsvorsprungspaares eine Biegung vorzusehen ist, um die Sicherung gegen ein Herausfallen der Rollen vorzusehen, d. h. um den Abstand der äußeren Enden der Führungsvorsprünge kleiner zu bemessen als den Rollendurchmesser.

Zwar werden bei der bekannten Vorrichtung zusätzlich noch die erwähnten axialen Führungsabschnitte an den Schenkeln des Rollenkäfigs vorgesehen, wodurch die Rollen auf jeder Seite an drei Stellen ihres Umfangs axial geführt sein sollen, jedoch wird die Axialführung der Rollen dadurch überbestimmt. Diese Überbestimmung hat zur Folge, daß für jede Rolle der gegenseitige Abstand der beiden axialen Führungsabschnitte und derjenige der zusammenwirkenden Führungsvorsprungspaare genau auf die Rollenlänge abzustimmen sind, um tatsächlich auf jeder Rollenseite eine Axialführung an drei Stellen zu erreichen, was aber durch die unvermeidbaren Fertigungstoleranzen schwierig ist. Diese Abstimmung der Fertigungstoleranzen wird noch weiterhin erschwert durch das Erfordernis, die Abstände zwischen den jeweils ein Paar bildenden Führungsvorsprüngen auf den Rollendurchmesser und die konkaven Ausrundungen an den Führungsvorsprüngen auf den äußeren Rollenrandradius abzustimmen und diese Abstimmung bei der Massenfertigung aufrechtzuerhalten.

Selbst wenn das gelingen sollte, befindet sich jede Rollenseite allein für die axiale Rollenführung an drei Stellen im verschleißfördernden Reibungseingriff mit zugeordneten Flächen des Rollenkäfigs.

Der vorliegenden Erfindung liegt die Aufgabe zugrunde, eine Spreizkeil-Bremsbetätigungsvorrichtung bereitzustellen, bei welcher die Rollen bei vergleichsweise geringem Fertigungsaufwand für den Rollenkäfig exakt und im Betrieb reibungsarm geführt sind.

Die gestellte Aufgabe wird ausgehend von einer SpreizkeilBremsbetätigungsvorrichtung der eingangs angegebenen Gattung dadurch gelöst, daß die Führungsvorsprünge über ihre Materialdicke durchgehend etwa parallel zu den Mittelachsen der Rollen ausgerichtete Führungsflächen besitzen, die mindestens teilweise den zylindrischen Umfangsflächen der Rollen zugeordnet sind, daß die axialen Führungsabschnitte durch von den Führungsvorsprüngen ausgehende Freischnitte, durch welche axiale Führungsabschnitte von Zungenform mit sich zur Mitte der Stirnflächen der Rollen erstreckender Zungenspitze gebildet sind, in ihrer wirksamen Führungsfläche verringert sind und daß der Abstand der beiden den Innenwandungen der Schenkel zugekehrten Außenflächen des Spreizkeils etwas größer als die Länge der Rollen und der Abstand der beiden Innenwandungen der Schenkel wenigstens im Bereich der Rollen bei nicht in den Rollenkäfig eingesetzten Rollen und nicht eingeführtem Spreizkeil gleich oder etwas kleiner als die Länge der Rollen ist.

Bei der erfindungsgemäßen Spreizkeil-Bremsbetätigungsvorrichtung sind an den Führungsvor-

sprüngen keine fertigungstechnisch aufwendigen Umfassungsausrundungen für die äußeren Rollenränder vorzusehen, weil die Führungsvorsprünge mit ihren einfachen Führungsflächen ausschließlich für die tangentiale Führung der Rollen sorgen. Die axiale Führung der Rollen übernehmen die axialen Führungsabschnitte, die zur Reibungsverminderung in ihrer Flächengröße durch die Freischnitte verringert sind, welche zugleich mit Fertigungsvorteil eine erleichterte Abkröpfung der Führungsvorsprünge nach innen ohne Verformungsrückwirkungen auf die axialen Führungsabschnitte erlauben.

Durch die Abstimmung der vorstehend angegebenen Abstandsmaße auf die Länge der Rollen wird erreicht, daß bei der Einführung des Spreizkeils in den Rollenkäfig eine geringfügige Zunahme des Abstands zwischen den beiden Innenwandungen der Schenkel eintritt, wodurch die axialen Führungsabschnitte von den Rollenstirnflächen abgehoben sind. Die axiale Führung der Rollen übernehmen damit im wesentlichen die Seitenflächen der in den Druckstößeln befindlichen Schlitze. Im Betrieb können die Rollen in axialen Grenzlagen jeweils lediglich einem axialen Führungsabschnitt reibend anliegen, wenn zwischen den Rollen, dem Rollenkäfig und den Schlitzen in den Stößeln eine entsprechende Relativlage gegeben ist. Dadurch wird die Reibung zwischen dem Rollenkäfig und den Rollen sehr wesentlich herabgesetzt, ohne daß die exakte tangentiale und axiale Führung der Rollen verlorengeht.

Zur Herabsetzung der Reibung zwischen Rollenkäfig, d. h. den beiden Innenwandungen der Schenkel, und Spreizkeil, d. h. den beiden den Innenwandungen der Schenkel zugekehrten Außenflächen des Spreizkeils, sind vorteilhaft zwischen den Außenflächen des Spreizkeils und den Innenwandungen der Schenkel in an sich bekannter Weise dünne Schichten eines Gleiteigenschaften aufweisenden Kunststoffs angeordnet.

Diese dünnen Schichten können auf verschiedene Weise vorgesehen werden. Zweckmäßig kann die Anordnung so getroffen sein, daß in den Innenwandungen der Schenkel in Längsrichtung Nuten, Ausdrückungen od. dgl. angebracht sind, in welchen nach innen vorstehend entsprechend geformte Kunststoffstreifen gehalten sind. In einer alternativen Ausführungsform kann im Spreizkeil parallel zu den Achsen der Rollen mindestens eine Durchgangsbohrung angebracht sein, in welche ein beidseitig etwas über die Außenflächen vorstehender Kunststoffstab eingesetzt ist. Selbstverständlich können die erwähnten in Längsrichtung angebrachten Nuten auch an den den Innenwandungen der Schenkel des Rollenkäfigs zugekehrten Außenflächen des Spreizkeils vorgesehen sein. In diesem Fall stehen die darin gehaltenen Kunststoffstreifen etwas über diese Außenflächen vor. In jedem Falle verhindern die erwähnten Kunststoffelemente eine metallische Reibung zwischen dem Spreizkeil und dem Rollenkäfig.

Weitere Einzelheiten der Erfindung werden nachfolgend anhand der Zeichnungen in Ausführungsbeispielen erläutert. Darin zeigt:

Fig. 1 einen abgebrochenen Schnitt etwa durch die senkrechte Mittelebene der Spreizkeil-Bremsbetätigungsvorrichtung,

Fig. 2 eine Hauptansicht des Rollenkäfigs,

Fig. 3 eine Seitenansicht des Rollenkäfigs,

Fig. 4 die Unteransicht des Rollenkäfigs,

Fig. 5 einen Schnitt durch den Rollenkäfig entlang der Linie V-V in Fig. 2,

Fig. 6 eine Hauptansicht einer zur Reibungsherabsetzung modifizierten Ausführungsform des Rollenkäfigs mit eingesetzten Rollen und eingeführtem Spreizkeil,

Fig. 7 einen Schnitt entlang der Linie VII-VII in Fig. 6,

Fig. 8 eine Hauptansicht einer anderen zur Reibungsherabsetzung modifizierten Ausführungsform des Rollenkäfigs mit eingesetzten Rollen und eingeführtem Spreizkeil,

Fig. 9 einen Schnitt entlang der Linie IX-IX der Fig. 8,

Fig. 10 eine Hauptansicht einer weiteren zur Reibungsherabsetzung modifizierten Ausführungsform mit eingesetzten Rollen und eingeführtem Spreizkeil und

Fig. 11 einen Schnitt entlang der Linie XI-XI der Fig. 10.

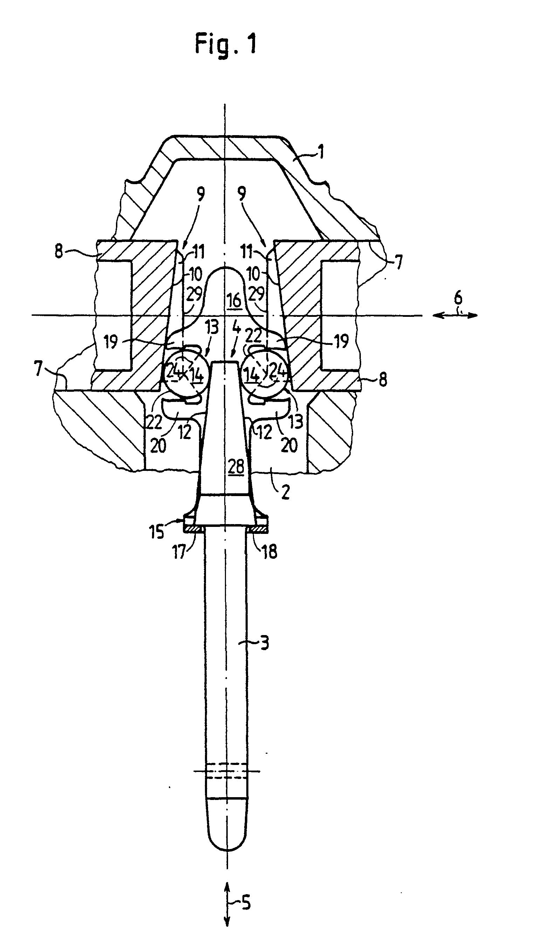

Aus Fig. 1 ist das Gehäuse 1 der Spreizkeil-Bremsbetätigungsvorrichtung ersichtlich, das mit einer Gehäuseausnehmung 2 versehen ist, in welche bezogen auf die Zeichnungsdarstellung von unten her der an einem Ende einer Betätigungsstange 3 befestigte Spreizkeil 4 hineinragt, der in seiner durch einen Pfeil 5 angedeuteten Längsrichtung zur Betätigung der im übrigen nicht dargestellten Bremse verschiebbar ist. In einer durch einen weiteren Pfeil 6 angegebenen Querrichtung münden in die Gehäuseausnehmung 2 zwei gegenüberliegende und miteinander fluchtende Führungsbohrungen 7 ein, in welchen jeweils ein zylindrischer Druckstößel 8 verschiebbar, aber unverdrehbar gelagert ist.

Die Druckstößel 8 befinden sich mit ihren inneren Enden innerhalb der Gehäuseausnehmung 2, während ihre abgebrochenen äußeren Enden in üblicher Weise mit den Enden der Bremsbacken (nicht dargestellt) einer Fahrzeugtrommelbremse in Verbindung stehen. Die einander gegenüberliegenden inneren Enden der Druckstößel 8 sind jeweils in spiegelbildlich übereinstimmender Weise mit einem Schlitz 9 versehen, der am Schlitzgrund von einer Schrägfläche 10 und seitlich von Seitenwänden 11 begrenzt ist, von denen in Fig. 1 nur die hintere Seitenwand sichtbar ist. Die Schrägflächen 10 sind planparallel zu den ihnen zugekehrten Keilflächen 12 des Spreizkeils 4 ausgerichtet.

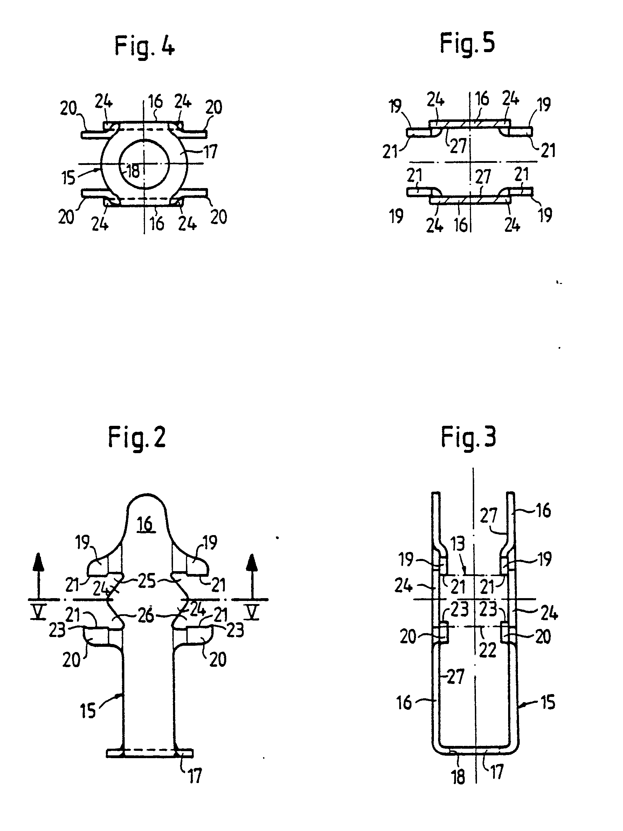

Zwischen jeweils einer Keilfläche 12 und einer Schrägfläche 10 ist eine zylindrische Rolle 13 vorgesehen, die bei Bremsbetätigung des Spreizkeils 4, d. h. bezogen auf die Zeichnung bei nach oben gerichteter Bewegung des Spreizkeils 4 eine kraftschlüssige Verbindung zwischen den genannten Flächen herstellt. Die beiden Rollen 13 sind jeweils mit ihren beiden Stirnflächen 14 zwischen den Seitenwänden 11 des jeweils zugehörigen Schlitzes 9 in Längsrichtung 5 verschiebbar geführt. Außerdem befinden sich die beiden Rollen 13 in geführter Lage innerhalb eines weiter unten noch näher beschriebenen Rollenkäfigs 15, der auf dem Spreizkeil 4 und seiner Betätigungsstange 3 in Längsrichtung 5 gleitend beweglich angeordnet ist. Der Rollenkäfig 15 besitzt zwei zur Querrichtung 6 parallel verlaufende Schenkel 16, welche an ihrem bezogen auf die Zeichnungen unteren Ende durch einen Steg 17 zu einem nach oben offenen U-förmigen Element miteinander verbunden sind, wie beispielsweise Fig. 3 veranschaulicht. Im Steg 17 befindet sich eine Durchtrittsbohrung 18 für die Betätigungsstange 3. Im gezeichneten Beispiel ist der Rollenkäfig 15 aus einem geeigneten Blechmaterial gleichbleibender Dicke ausgestanzt oder feingeschnitten und anschließend U-förmig gebogen.

Wie die Fig. 1 bis 5 erkennen lassen, erstrecken sich von den Schenkeln 16 ausgehend in entgegengesetzter Richtung paarweise vorgesehene Führungsvorsprünge 19 und 20, die nach innen abgekröpft und wie die Rollen 13 ebenfalls zwischen den Seitenwänden 11 der Schlitze 9 in Längsrichtung 5 verschiebbar geführt sind.

Die Führungsvorsprünge besitzen über ihre Materialdicke durchgehend etwa parallel zu den Mittelachsen der Rollen 13 ausgerichtete Führungsflächen 21, welche die Rollen 13 an diametral gegenüberliegenden Stellen mit geringem Bewegungsspiel tangential an den zylindrischen Umfangsflächen 22 führen. Zur Verdeutlichung dieser Verhältnisse ist in Fig. 3 eine Rolle 13 in strichpunktierten Linien eingezeichnet. Die Führungsflächen 21 besitzen paarweise einen gleichbleibenden Abstand und sind parallel zur Querrichtung 6 ausgerichtet. Im gezeigten Beispiel (Fig. 2) besitzen die Führungsvorsprünge 20 am äußeren Ende ihrer Führungsflächen 21 einwärts gerichtete Nasen 23, deren Abstand zu dem jeweils gegenüberliegenden äußeren Ende der Führungsvorsprünge 19 geringer ist als der Rollendurchmesser, wodurch die Rollen 13 daran gehindert sind, nach außen in Querrichtung 6 aus dem Rollenkäfig 15 herauszufallen.

Zwischen jeweils einem Führungsvorsprungspaar 19, 20 befindet sich ein axialer Führungsabschnitt 24, der durch bei der Stanz- oder Feinschneidherstellung des Rollenkäfigs 15 angebrachte Freischnitte 25 und 26 eine Zungenform besitzt, deren Zungenspitze zur Mitte der Stirnflächen 14 der Rollen 13 weist, wie Fig. 1 verdeutlicht. Die Freischnitte 25, 26 verringern einerseits die den Stirnflächen 14 zugeordneten inneren Führungsflächen der axialen Führungsabschnitte 24 und ermöglichen andererseits die dargestellte und beschriebene Abkröpfung der Führungsvorsprünge 19, 20 nach innen, ohne daß es dabei zu Verformungen im Bereich der axialen Führungsabschnitte 24 kommt. Die Freischnitte 25, 26 begrenzen nach innen zu auch die wirksame Länge der Führungsflächen 21.

Die axialen Führungsabschnitte 24 liegen mit ihren inneren den Stirnflächen 14 der Rollen 13 zugeordneten Führungsflächen ebenflächig mit den Innenwandungen 27 der Schenkel 16, wie besonders aus Fig. 5 hervorgeht. Dies bedeutet, daß der gegenseitige Abstand der paarweise gegenüberliegenden axialen Führungsabschnitte 24 gleich ist dem Abstand der Innenwandungen 27 der Schenkel 16. Dieser Abstand ist bei nicht in den Rollenkäfig 15 eingesetzten Rollen 13 und nicht in den Rollenkäfig eingeführtem Spreizkeil 4 gleich oder geringfügig kleiner als die Länge der Rollen 13.

Die Breite des Spreizkeils 4, d. h. der Abstand der beiden den Innenwandungen 27 der Schenkel 16 zugekehrten Außenflächen 28 des Spreizkeils ist dagegen etwas größer als die Länge der Rollen 13.

Wird die aus dem Spreizkeil 4 der damit fest verbundenen Betätigungsstange 3, dem Rollenkäfig 15 und den Rollen 13 bestehende Einheit vormontiert, so wird zunächst der Rollenkäfig 15 mit seiner Durchtrittsbohrung 18 bis zum Anschlag an den Spreizkeil 4 über die Betätigungsstange 3 geschoben. Hierbei liegen die Außenflächen 28 den Innenwandungen 27 an, wobei aufgrund der angegebenen Abstandsbemessung die Schenkel 16 geringfügig nach außen gebogen werden. Zur Anbringung der Rollen 13 werden die Schenkel 16 um einige Millimeter elastisch auseinandergebogen, so daß die Rollen 13 von den Seiten her zwischen die Führungsvorsprünge 19, 20 und die axialen Führungsabschnitte 24 eingelegt werden können. Danach läßt man die Schenkel 16 zurückfedern bis zum Anschlag der Innenwandungen 27 an die Außenflächen 28. In dieser Lage haben die Rollen 13 zwischen den axialen Führungsabschnitten 24 ein geringes axiales Spiel.

Axiale Führung der Rollen 13 und tangentiale Führung der Rollen sind klar voneinander getrennt. Die axiale Führung übernehmen die axialen Führungsabschnitte 24 und nach dem Einführen der vormontierten Keileinheit zwischen die Druckstößel 8 zusätzlich noch die Seitenwände 11 der Schlitze 9. Die Führungsvorsprünge 19, 20 mit ihren Führungsflächen 21 haben dagegen ausschließlich die Aufgabe, die Rollen 13 an ihren zylindrischen Umfangsflächen 23 tangential zu führen.

Die Abkröpfung der Führungsvorsprünge 19, 20 ist so vorgenommen, daß deren Außenmaß, d. h. der Abstand zwischen ihren nach außen gekehrten Flächen etwas geringer ist als die Länge der Rollen 13 und natürlich auch geringer ist als der Abstand der Seitenwände 11, zwischen denen sie in Längsrichtung 5 verschiebbar geführt sind. Das Außenmaß der Schenkel 16 und damit auch das Außenmaß der damit eben liegenden axialen Führungsabschnitte ist dagegen größer als der Abstand der Seitenwände 11, so daß diese Bereiche des Rollenkäfigs 15 nicht in die Schlitze 9 eintreten können. Die Zungenspitzen der axialen Führungsabschnitte 24 befinden sich zwischen den zueinander planparallelen und rechtwinklig zur Querrichtung 6 ausgerichteten Stirnflächen 29 der Druckstößel 8, wie Fig. 1 zeigt.

In Fig. 1 ist die Relativlage der Teile der Vorrichtung etwa zu Beginn der Bremsbetätigung dargestellt. Bei Fortschreiten der Bremsbetätigung dringt der Spreizkeil 4 weiter zwischen die Rollen 13 ein, wobei diese sowohl an den Keilflächen 12 als auch an den Schrägflächen 10 abwälzen. Hierbei wird auch der Rollenkäfig 15 in Betätigungsrichtung mitgenommen. Nach Beendigung der Bremsbetätigung bewegen sich die Teile der Vorrichtung in entgegengesetzter Richtung, bis schließlich der Kraftschluß zwischen den Keilflächen 12, den Rollen 13 und den Schrägflächen 10 aufgehoben ist.

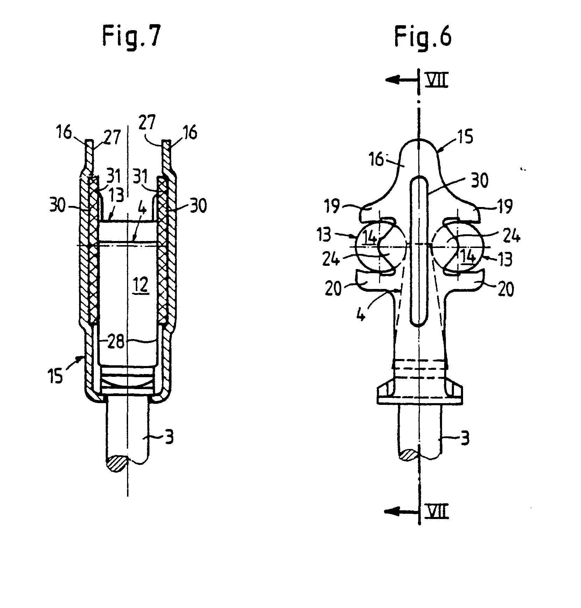

Bei den in den Fig. 6 bis 11 dargestellten weiteren Ausführungsbeispielen sind Maßnahmen zur Herabsetzung der Reibung zwischen dem Spreizkeil 4 und dem Rollenkäfig 15 getroffen. Bei der Ausführungsform nach den Fig. 6 und 7 befinden sich in den Schenkeln 16 in Längsrichtung angebrachte und einander gegenüberliegende Ausdrückungen 30, die von den Innenwandungen 27 ausgehen und zur Halterung von entsprechend geformten Kunststoffstreifen 31 dienen. Die Kunststoffstreifen 31 stehen mit ihren den Außenflächen 28 des Spreizkeils 4 zugewandten Flächen etwas über die Innenwandungen 27 vor. Der eingeführte Spreizkeil 4 berührt daher nicht die Innenwandungen 27, sondern die Kunststoffstreifen 31, wodurch bei Relativverschiebung zwischen dem Spreizkeil 4 und dem Rollenkäfig 15 die Reibung herabgesetzt wird. Im übrigen entspricht die Ausführung der Vorrichtung derjenigen, die mit Bezug auf die Fig. 1 bis 5 beschrieben wurde.

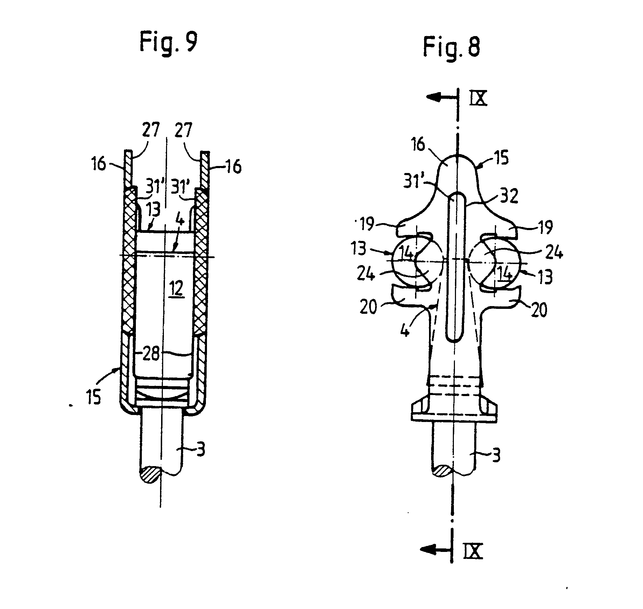

Entsprechendes gilt auch für das in den Fig. 8 und 9 dargestellte Ausführungsbeispiel. Hierbei sind anstelle der Ausdrückungen 30 durch die Materialdicke hindurchgehende Nuten 32 in den Schenkeln 16 vorgesehen. Die Nuten 32 besitzen sich von innen nach außen verengende schräggestellte Wandflächen, so daß die an ihren Außenflächen entsprechend abgeschrägten Kunststoffstreifen 31' nach dem Einsetzen von innen in den Nuten 32 festgehalten werden. Auch in diesem Falle stehen die Kunststoffstreifen 31' mit ihren inneren den Außenflächen 28 des Spreizkeils 4 anliegenden Flächen etwas über die Innenwandungen 27 der Schenkel 16 vor, wobei die zeichnerische Darstellung insoweit etwas übertrieben ist.

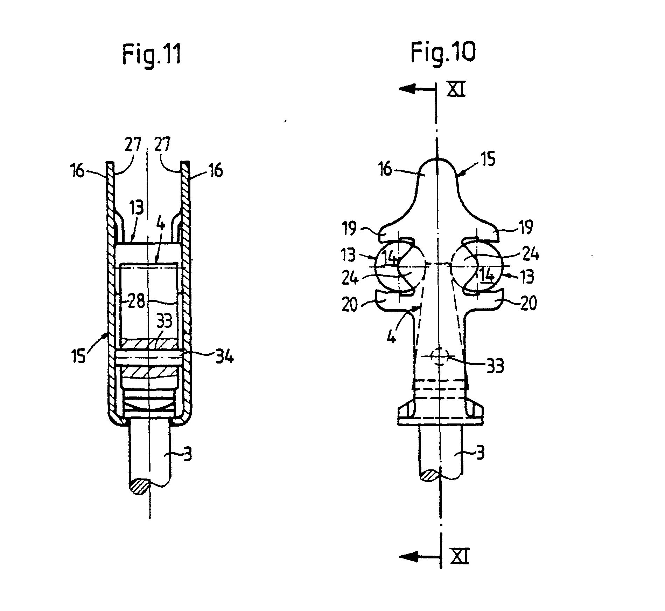

Bei der in den Fig. 10 und 11 dargestellten Ausführungsform schließlich befindet sich im Spreizkeil parallel zu den Achsen der Rollen 13 eine Durchgangsbohrung 33, in welche ein beidseitig etwas über die Außenflächen 28 des Spreizkeils 4 vorstehender Kunststoffstab 34 eingesetzt ist. Auch bei dieser Ausführungsform ist ein direkter metallischer Reibkontakt zwischen den Außenflächen 28 und den Innenwandungen 27 vermieden.

## Patentansprüche

1. Spreizkeil-Bremsbetätigungsvorrichtung für Trommelbremsen von Fahrzeugen, mit einem Gehäuse (1) zur Aufnahme eines in eine Gehäuseausnehmung (2) hineinragenden, in seiner Längsrichtung betätigbaren Spreizkeils (4) und zwei zu beiden Seiten des Spreizkeils (4) in einer Querrichtung zum Spreizkeil (4) im Gehäuse (1) gelagerten, axial miteinander fluchtenden, durch mittels des Spreizkeils (4) vorgenommene gegenseitige Verschiebungen die Bremsbacken betätigenden Druckstößeln (8), wobei jeweils zwischen einer der beiden Keilflächen (12) des Spreizkeils (4) und einer zu dieser parallel ausgerichteten Schrägfläche (10) des benachbarten Druckstößels (8) eine mit ihren Stirnflächen (14) an den Seitenflächen (11) eines im Druckstößel (8) angebrachten die Schrägfläche (10) bildenden Schlitzes (9) geführte zylindrische Rolle (13) kraftschlüssig angeordnet ist und beide Rollen (13) in einem auf dem Spreizkeil (4) und zwischen den Seitenflächen (11) der Schlitze (9) in Längsrichtung gleitend beweglich angeordneten Rollenkäfig (15) geführt sind, welcher mit zwei zur Querrichtung parallel verlaufenden Schenkeln (16) versehen ist, an denen sich in entgegengesetzter Richtung paarweise erstreckende von den Schenkeln (16) nach innen abgekröpfte Führungsvorsprünge (19, 20) angebracht sind, von denen jeweils zwei die Rollen (13) an diametral gegenüberliegenden Stellen tangential führen und an ihren äußeren Enden einen Abstand besitzen, der kleiner als der Rollendurchmesser ist, wobei zwischen den Führungsvorsprüngen (19, 20) jedes Vorsprungpaares ebenflächig mit den Innenwandungen (27) der Schenkel (16) ein dem an die Keilfläche (12) angrenzenden Bereich der Stirnfläche (14) der Rolle (13) zugeordneter axialer Führungsabschnitt (24) am Schenkel (16) gebildet ist, dadurch gekennzeichnet, daß die Führungsvorsprünge (19, 20) über ihre Materialdicke durchgehend etwa parallel zu den Mittelachsen der Rollen (13) ausgerichtete Führungsflächen (21) besitzen, die mindestens teilweise den zylindrischen Umfangsflächen (22) der Rollen zugeordnet sind, daß die axialen Führungsabschnitte (24) durch von den Führungsvorsprüngen (19, 20) ausgehende Freischnitte (25, 26), durch welche axiale Führungsabschnitte (24) von Zungenform mit sich zur Mitte der Stirnflächen (14) der Rollen (13) erstreckender Zungenspitze gebildet sind, in ihrer wirksamen Führungsfläche verringert sind, und daß der Abstand der beiden den Innenwandungen (27) der Schenkel (16) zugekehrten Außenflächen (28) des Spreizkeils (4) etwas größer als die Länge der Rollen (13) und der Abstand der beiden Innenwandungen (27) der Schenkel (16) wenigstens im Bereich der Rollen bei nicht in den Rollenkäfig (15) eingesetzten Rollen und nicht eingeführtem Spreizkeil gleich oder etwas kleiner als die Länge der Rollen ist.

2. Spreizkeil-Bremsbetätigungsvorrichtung nach Anspruch 1, dadurch gekennzeichnet, daß zur Herabsetzung der Reibung zwischen Rollenkäfig (15) und Spreizkeil (4) zwischen den Außenflächen (28) des Spreizkeils und den Innenwandungen (27) der Schenkel (16) in an sich bekannter Weise dünne Schichten eines Gleiteigenschaften aufweisenden Kunststoffs angeordnet sind.

3. Spreizkeil-Bremsbetätigungsvorrichtung nach Anspruch 2, dadurch gekennzeichnet, daß in den Innenwandungen (27) der Schenkel (16) in Längsrichtung Nuten, Ausdrückungen od. dgl. (32, 30) angebracht sind, in welchen nach innen vorstehend entsprechend geformte Kunststoffstreifen (31, 31') gehalten sind.

4. Spreizkeil-Bremsbetätigungsvorrichtung nach Anspruch 2, dadurch gekennzeichnet, daß im Spreizkeil (4) parallel zu den Achsen der Rollen (13) mindestens eine Durchgangsbohrung (33) angebracht ist, in welche ein beidseitig etwas über die Außenflächen (28) vorstehender Kunststoffstab (34) eingesetzt ist.

## Revendications

1. Dispositif d'actionnement de frein a coin ecarteur pour freins a tambour de vehicules, comprenant un boîtier (1) destiné a contenir un coin écarteur (4) pouvant être actionné dans sa direction longitudinale, et qui pénètre dans une cavité (2) du boîtier, et deux poussoirs de pression (8), montés dans le boîtier (1), des deux côtés du coin écarteur (4), dans une direction transversale au coin écarteur (4) qui sont alignés axialement l'un sur l'autre et qui actionnent les mâchoires du frein par des déplacements mutuellement opposés commandés à l'aide du coin écarteur (4), dispositif dans lequel, entre chacune des deux surfaces obliques (12) du coin écarteur (4) et une surface oblique (10) du poussoir de pression (8) adjacent, qui est orientée parallèlement à celle du coin écarteur, est disposé, dans une disposition propre à la transmission des forces, un rouleau cylindrique (13) guidé par ses surfaces frontales (14) le long des surfaces latérales (11) d'une fente (9) ménagée dans le poussoir (8) et qui forme la surface oblique (10), dans lequel les deux rouleaux (13) sont guidés dans une cage à rouleaux (15) montée mobile pour coulisser dans la direction longitudinale sur le coin écarteur (4) et entre les surfaces latérales (11) des fentes (9), cage qui est munie de deux branches (16) s'étendant parallèlement à la direction transversale et sur lesquelles sont prévues des saillies de guidage (19, 20) contre-coudées vers l'intérieur, qui partent des branches (16), deux à deux l'une en sens inverse de l'autre, deux saillies guidant un rouleau (13) tangentiellement en deux points diamétralement opposés, et présentant à leurs extrémités extérieures une distance d'écartement inférieure au diamètre des rouleaux, et dans lequel chaque branche (16) présente, entre les saillies de guidage (19, 20) de chaque paire de saillies, et dans le même plan que la paroi intérieure (2) des branches (16), un segment de guidage axial (24) qui est associé à la région de la surface frontale (14) du rouleau (13) qui est adjacente à la surface oblique (12) du coin, caracterisé en ce que les saillies de guidage (19, 20) présentent des surfaces de guidage (21) s'étendant sur toute leur épaisseur de matière, orientées à peu près parallèlement aux axes geométriques des rouleaux (13), et qui correspondent au moins partiellement aux surfaces circonférentielles cylindriques (22) des rouleaux, en ce que la surface effective de guidage des segments de guidage axial (24) est réduite par des échancrures (25, 26) partant des saillies de guidage (19, 20), et qui délimitent des segments de guidage axial (24) en forme de langue, dont la pointe de langue s'étend vers le milieu des surfaces frontales (14) des rouleaux (13), et en ce que la distance d'écartement des deux surfaces extérieures (28) du coin écarteur (4) qui regardent vers les parois intérieures (27) des branches (16) est légèrement plus grande que la longueur des rouleaux (13) tandis que, au moins dans la région des rouleaux, la distance d'écartement des deux parois intérieures (27) des branches (16) est égale ou légèrement inférieure à la longueur des rouleaux lorsque les rouleaux ne sont pas montés dans la cage à rouleaux (15) et que le coin écarteur n'est pas engagé.

2. Dispositif d'actionnement de frein à coin écarteur selon la revendication 1, caractérisé en ce que, pour réduire le frottement entre la cage à rouleaux (15) et le coin écarteur (4), des couches minces d'une matière plastique possédant des propriétés de glissement sont disposées d'une façon connue en soi entre les surfaces extérieures (28) du coin écarteur et les parois intérieures (27) des branches (16).

3. Dispositif d'actionnement de frein à coin écarteur selon la revendication 2, caractérisé en ce que, dans les parois intérieures (27) des branches (16), sont formées des rainures, empreintes ou formations équivalentes (32, 30) disposées dans la direction longitudinale et dans lesquelles sont maintenues des bandes de matière plastique (31, 31') de forme conjuguée, qui font saillie vers l'interieur.

4. Dispositif d'actionnement de frein à coin ecarteur selon la revendication 2, caractérisé en ce que, dans le coin écarteur (4) est ménagé, parallèlement aux axes des rouleaux (13), au moins un perçage traversant (33) dans lequel est logée une tige de matière plastique (34) qui fait légèrement saillie au-delà des surfaces extérieures (28) sur les deux côtés.

## Claims

1. Spreader wedge brake actuation device for drum brakes of automobiles, comprising a housing (1) for accommodating a spreader wedge (4), penetrating into a housing aperture (2) and capable of being actuated in its longitudinal direction, and two mutually axially aligned push rods (8), mounted in the housing (1) on either side of the spreader wedge (4) in a transverse direction to the spreader wedge (4) and actuating the brake shoes by relative displacements produced by means of the spreader wedge (4), wherein a cylindrical roller (13), guided with its end faces (14) on the lateral faces (11) of a slit (9) formed in the push rod (8) and constituting an inclined surface (10), is disposed force-transmittingly between each of the two wedge faces (12) of the spreader wedge (4) and the inclined surface (10), parallel thereto, of the adjacent push rod (8), and both the rollers (13) are guided in a roller cage (15) mounted on the spreader wedge (4) and slidably movable between the lateral faces (11) of the slits (9), which (roller cage) is furnished with two arms (16), extending parallel to the transverse direction, on which arms inwardly cranked guide projections (19, 20) extending in pairs in opposite directions from the arms (16) are mounted, of which arms two each tangentially guide the rollers (13) at diametrally opposite positions and are at a distance from each other at their outer ends which is smaller than the roller diameter, wherein, between the guide projections (19, 20) of each pair of projections an axial guide portion (24) is formed on the arm (16), flush with the inner face (27) of this arm (16), this axial guide portion being associated with the region of the end face (14) of the roller (13) adjacent to the wedge face (12), characterized in that the guide projections (19, 20) possess guide surfaces (21) orientated generally parallel to the central axes of the rollers (13) and continuous through the material thickness of the projections, which (guide surfaces) are associated at least partly with the cylindrical circumferential surfaces (22) of the rollers, that the axial guide portions (24) are reduced in their effective guide area by cut-outs (25, 26) starting from the guide projections (19, 20), by which (cut-outs) axial guide portions (24) of tongue form with the tip of the tongue extending towards the middle of the end faces (14) of the rollers (13) are formed, and that the distance between the two outer faces (28) of the spreader wedge (4) which face towards the inner faces (27) of the arms (16) is somewhat greater than the length of the rollers (13), and the distance between the two inner faces (27) of the arms (16), when rollers are not inserted in the roller cage (15) and the spreader wedge is not introduced, is equal to or somewhat smaller than the length of the rollers at least in the region of the rollers.

2. Spreader wedge brake actuation device according to Claim 1, characterized in that, for reducing the friction between roller cage (15) and spreader wedge (4), thin layers of a plastics material possessing lubricating properties are disposed in known manner between the outer faces (28) of the spreader wedge and the inner faces (27) of the arms (16).

3. Spreader wedge brake actuation device according to Claim 2, characterized in that, in the inner faces (27) of the arms (16), grooves, pressed-out zones or the like (32, 30) are formed in the longitudinal direction, in which correspondingly shaped plastics strips (31, 31') projecting inwards are held.

4. Spreader wedge brake actuation device according to Claim 2, characterized in that, in the spreader wedge (4), at least one through bore (33) is formed parallel to the axes of the rollers (13), into which bore a plastics bar (34), projecting on both sides somewhat beyond the outer faces (28), is inserted.

# Fig. 1

Fig. 4

Fig. 5

Fig. 2

Fig. 3

2

Fig.7

Fig.6

# Fig. 9

# Fig. 8

## Fig.11

## Fig.10